Europäisches Patentamt

European Patent Office

Office européen des brevets

(11) Publication number: **0 365 234 B1**

# EUROPEAN PATENT SPECIFICATION

(45) Date of publication of patent specification: **18.05.94**    (51) Int. Cl.⁵: **C08F 8/30**

(21) Application number: **89310535.3**

(22) Date of filing: **13.10.89**

(54) **Process for producing ethylenic graft copolymers.**

(30) Priority: **15.10.88 JP 260298/88**

(43) Date of publication of application:
**25.04.90 Bulletin  90/17**

(45) Publication of the grant of the patent:
**18.05.94 Bulletin  94/20**

(84) Designated Contracting States:
**DE FR GB IT NL**

(56) References cited:
DE-B- 1 258 604
FR-A- 2 150 882
US-A- 3 136 738
US-A- 3 388 186

CHEMICAL ABSTRACTS, vol. 77,1972, Colum-
bus, Ohio, US; abstract no 89426D, TEREDA,
HIROSHI: 'Polyolefin Polyamide Copolymer-
composition', page 43; column 2 & JP-A-
7138022

(73) Proprietor: **SUMITOMO CHEMICAL COMPANY,
LIMITED**
**5-33 Kitahama 4-chome**
**Chuo-ku**
**Osaka-shi Osaka(JP)**

(72) Inventor: **Ohmae, Tadayuki**
**6-10-2-409, Inagehigashi**
**Chiba-shi Chiba(JP)**
Inventor: **Toyoshima, Yoshiki**
**832-4, Shiizu**
**Ichihara-shi Chiba(JP)**
Inventor: **Kawakita, Toshio**
**2-1-246, Kuwata-cho**
**Ibaraki-shi Osaka(JP)**

(74) Representative: **Diamond, Bryan Clive et al**
**Gee & Co.**
**Chancery House**
**Chancery Lane**
**London WC2A 1OU (GB)**

## Description

The present invention relates to a process for producing a graft copolymer comprising an ethylene copolymer having side chains of a polyamide structure, and more particularly to a process for producing a graft copolymer having high impact strength, high flexibility, satisfactory dyeability, and well balanced physical properties by graft-copolymerizing a lactam compound by ring-opening onto an ethylene copolymer containing maleic anhydride units.

Polyamide resins are extensively used as engineering plastics because of their advantages in stiffness, abrasion resistance, chemical resistance, heat resistance, and electrical properties. Polyamide resins, however, have disadvantages in low impact resistance, and deterioration of physical properties on moisture absorption, which are required to be improved.

On the other hands, ethylene copolymers such as an ethylene-acrylic ester-maleic anhydride copolymer have advantages of flexibility suitable for a rubber elastomer, high impact strength, no hygroscopicity, satisfactory forming characteristics, and sufficient adhesiveness to metals and polyamide resins. Ethylene copolymers, however, are inferior in abrasion resistance, chemical resistance and heat resistance.

As described above, the advantages of polyamide resins correspond to the disadvantages of ethylene copolymers while the advantages of ethylene copolymer correspond to the disadvantages of polyamide resins. Accordingly, many investigations have been made on blending the two types of resins into an alloy to compensate the mutual disadvantages and to improve the physical properties of the resins.

JP-B-55-44108, for example, describes blending of a small amount of an ethylene copolymer such as an ethylene-acrylic ester-maleic anhydride copolymer into a polyamide resin to improve the impact strength of the polyamide resin. (The term "JP-B" as used herein means an "examined Japanese patent publication".)

JP-A-62-275157 proposes blending of a large amount of an ethylene-acrylic ester-maleic anhydride copolymer into a polyamide resin to produce a thermoplastic elastomer. (The term "JP-A" as used herein means an "unexamined published Japanese patent application".)

However, in both cases, the products are compositions merely composed microscopically of separate phases, even though physical properties can be improved by combined use of a dispersant or other additives to increase the affinity between the two phases, because the products are produced mechanically by melt-blending a highly polar polyamide resin with an essentially less polar ethylene copolymer.

The present inventors have made extensive and detailed investigation from the viewpoint mentioned above and have found that copolymers are obtained which are improved drastically in bonding and dispersing level between the ethylene copolymer structure and the polyamide structure, and have excellent physical properties through graft copolymerization of a lactam compound onto an ethylene copolymer comprising specific components by a novel process.

An object of the present invention is to provide a method for homogeneously dispersing a polyamide structure among ethylene copolymer molecules, namely a method for bonding and dispersing an ethylene copolymer structure and a polyamide structure at a molecular level for the purpose of eliminating the aforementioned limitations in mechanical melt blending and of modifying the resins to have improved physical properties.

US-A-3136738 discloses preparing a moldable graft copolymer by addition polymerisation of an ethylenic unsaturated monomer containing a polylactam side chain grafted thereto through an "active site" on the polymer backbone and which contains a specified N,N-diacyl tertiary amine grouping. An examples of such monomer is N-acrylcaprolactam. The vinyl precursor can be copolymerised with a vinyl monomer and the copolymer composition reacted with a lactam, such as caprolactam, to form the active site, or precursor monomers reacted with the lactam. Mass, solution or emulsion polymerisation can be used for the polymerisation of the vinyl backbone.

According to the present invention, there is provided a process for producing a graft copolymer comprising melt-blending:

(A) 1 to 90 parts by weight of an ethylene copolymer having a melt index of 1 to 500 g/10 min and comprising (a) 40 to 99.9% by weight of ethylene units, (b) 0 to 60% by weight of units of an alkyl ester of a $C_{3-8}$ $\alpha,\beta$-unsaturated carboxylic acid, and (c) 0.1 to 10% by weight of maleic anhydride units;

(B) 0.1 to 10 moles of a lactam metal salt compound per mole of maleic anhydride units; and

(C) 10 to 99 parts by weight of a lactam compound. Thereby the lactam compound is graft-copolymerized by ring-opening onto a part or the whole of the maleic anhydride units.

The component (A), namely an ethylene copolymer of the present invention is constituted of (a) ethylene units, optionally (b) $\alpha$-$\beta$-unsaturated carboxylic acid alkyl ester units, and (c) maleic anhydride

EP 0 365 234 B1

units: the ethylene units (a) being contained in an amount of 40 to 99.9% by weight, preferably in 65 to 90% by weight; the $\alpha,\beta$-unsaturated carboxylic acid alkyl ester units (b) being contained in 2 to 60% by weight, preferably 10 to 35%; and the maleic anhydride units (c) being contained in 0.1 to 10% by weight, preferably 0.5 to 5% by weight.

The monomer unit (b), namely an $\alpha,\beta$-unsaturated carboxylic acid alkyl ester, is an alkyl ester of $C_{3-8}$ unsaturated carboxylic acid such as acrylic acid and methacrylic acid: specific examples include methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate or isobutyl methacrylate, among which especially preferable are methyl acrylate, ethyl acrylate, n-butyl acrylate and methyl methacrylate.

Further, the graft copolymer may additionally include copolymers derived from copolymerization of ethylene with vinyl acetate, vinyl propionate, propylene, butene-1, isobutylene, pentene-1, or the like provided that the preferable properties are maintained.

Examples therefor are a copolymer of ethylene-methyl acrylate-maleic anhydride, a copolymer of ethylene-methyl methacrylate-maleic anhydride, a copolymer of ethylene-ethyl acrylate-maleic anhydride, a copolymer of ethylene-ethyl methacrylate-maleic anhydride and a copolymer of ethylene-maleic anhydride.

Regarding the ethylene copolymer (A), a content of the ethylene units (a) below 40% by weight, or a content of the alkyl $\alpha,\beta$-unsaturated acrylate ester units above 60% by weight is undesirable because mechanical properties such as tensile strength, and heat resistance such as heat distortion temperature will be significantly deteriorated. The maleic anhydride unit content below 0.1% by weight will lower the reaction rate of the lactam compound, while the content thereof above 10% by weight will shorten the graft chain of the lactam compound, thus such maleic anhydride unit content causing insufficient improvement of the physical properties of the polymer.

The melt index (JIS K6760) of the ethylene copolymer (A) should be within the range of 1 to 500 g/10 min., preferably 2 to 300 g/10 min. A melt index above 500 g/10 min. is undesirable in view of the mechanical properties of the resulting graft copolymers, while a melt index below 1 g/10 min. is undesirable because of the resulting poor dispersion state of the ethylene copolymer structure and the polyamide structure in the graft copolymers.

The component (B), namely lactam metal salt compounds of the present invention, include Grignard salt compounds of $\epsilon$-caprolactam such as caprolactammagnesium chloride, caprolactammagnesium bromide, caprolactammagnesium iodide, pyrrolidonemagnesium bromide, and piperidonemagnesium bromide; and metal salts of lactams such as caprolactamsodium, caprolactamlithium, caprolactampotassium, pyrrolidonesodium and piperidonesodium.

Instead of using a lactam metal salt compound, a lactam and a metal compound may be added separately into a reactor to form the lactam metal salt compound in the reactor. The lactam metal salt compound is preferably diluted with a lactam compound before the addition. Since the compounds will deteriorate in properties on absorption of moisture, sufficient care should be taken that the compounds do not absorb moisture: the compounds are preferably handled under an inert atmosphere such as nitrogen.

The lactam compounds (C) include $\alpha$-pyrrolidone, $\alpha$-piperidone, $\epsilon$-caprolactam, $\omega$-enantholactam, $\omega$-caprylolactam, $\omega$-decanolactam, $\omega$-undecanolactam, $\omega$-laurolactam, C-alkyl-substituted $\epsilon$-caprolactams, etc.: $\epsilon$-caprolactam is particularly important in industry. The lactam compounds may be combinedly used simultaneously or sequentially as well as used singly.

In producing graft copolymers of the present invention, the component (A), the ethylene copolymers, are used in an amount of 1 to 90 parts by weight, preferably 5 to 80 parts by weight, and the component (C), the lactam compounds, are used in an amount of 10 to 99 parts by weight, preferably 20 to 85 parts by weight. The use of the components outside the range specified above will not achieve the improvement of the physical properties by the molecular level dispersion of the present invention. The component (B), the lactam metal salt compounds, are used in an amount of 0.1 to 10 moles, preferably 0.5 to 2.0 moles per mole of maleic anhydride units (c) of the ethylene copolymer (A). An amount below 0.1 mole is undesirable because it lowers the graft polymerization velocity resulting in longer graft polymerization time: the amount above 10 moles is also undesirable because polyamide ungrafted to the ethylene copolymer is liable to form in a large amount, thus lowering the physical properties of the resultant graft copolymer.

In the process for producing a graft copolymer of the present invention, a lactam compound is subjected to ring-opening graft copolymerization to a part or the whole of the maleic anhydride units by melt-blending. In blending the components, the ethylene copolymer (A), the lactam metal salt compound (B) and the lactam (C) may be melt-blended in one-stage. Preferably, however, the ethylene copolymer (A) and the lactam metal salt compound (B) are firstly melt-blended, and subsequently the lactam compound (C) is added thereto and the mixture is melt-blended to give a graft copolymer. The two-stage blending gives

3

more homogeneous graft copolymers than single-stage blending.

In the melt-blending, preferably employed are blending machines for plastics processing such as single- or double-screw extruders, Banbury mixers, rolls, and kneaders. For example, an ethylene copolymer (A) may firstly be melt-blended with a lactam metal salt compound (B) and formed into pellets by means of an extruder, and thereafter a lactam compound (C) is added and again melt-blended by an extruder. However, by using an extruder provided with a side feeder, the ethylene copolymer (A) and the lactam metal salt compound (B) are preferably melt-blended at the first portion (or preceding stage), and the lactam compound (C) is added at the later portion (or following stage) from the side feed and melt-blended. A volatile component such as the unreacted lactam compound may suitably be removed under a reduced pressure or vacuum, if it is necessary.

In the extruder system, the average residence time of ethylene copolymer (A) is in a range of 1 to 60 minutes, preferably 1 to 30 minutes. An average residence time above 60 minutes is undesirable because the graft copolymerization is uneconomically saturated and gellation may be caused by a side reaction. An average residence time below one minute is not sufficient for the graft copolymerization. The temperature for the graft copolymerization is selected to be higher than the melting point of any of the ethylene copolymer (A) and the lactam compound (C), and within the thermally stable range of the resultant graft copolymer. The temperature is usually in the range of 100 to 280°C, preferably 120 to 250°C.

The improvement of the physical properties by the process of the present invention is considered to result from the uniform graft copolymerization at the maleic anhydride unit sites of the ethylene copolymer causing dispersion and mixing at a molecular level of the ethylene copolymer structure and the polyamide structure. In the blending, each component is preferably mixed preliminarily in the form of powder or pellets. However, if desired, the mixing may be omitted and the components fed separately and quantitatively to the blending apparatus.

The resin composition of the present invention may contain other additives such as a pigment, a dye, a reinforcing material, a filler, a heat stabilizer, an antioxidant, a weathering agent, a nucleating agent, a lubricant, an antistatic agent, a flame-retardant, a plasticizer, etc. or other polymers and the like if the additive does not impair the processability and the physical properties of the composition.

In particular, addition of a reinforcing agent or a filler, e.g. a surface-treated glass fiber, carbon fiber, talc or calcium carbonate, will give highly useful materials having high rigidity and high impact strength.

The blended composition of the present invention may be molded by various molding processes such as injection molding and extrusion molding.

The present invention will be explained below by means of the Examples.

In the Examples, the physical properties were determined as described below:

Heat deformation resistance (or heat sag) was determined from the deformation of a specimen (sample size: $100 \times 10 \times 2$ t mm) held in a manner of a cantilever in a hot-air oven at 100°C.

Heat distortion temperature was determined according to JIS K7207 (Specimen thickness: 3.2 mm, flexural stress: 4.6 kgf/cm$^2$).

Flexural modulus was determined according to JIS K7203 (Specimen thickness: 2 mm).

Tensile strength at break and elongation were determined according to JIS K6301 (specimen thickness: 2 mm).

Izod impact strength was determined according to JIS K7110 (specimen thickness: 4 mm, temperature: -40°C, with V notch). The symbol "NB" denotes the strength of higher the 50 kg•cm/cm, and no breaking occurring.

Melt index was determined according to JIS K6760 (190°C, 2160 g).

The ethylene copolymers shown below were prepared for the component (A) according to the methods described in JP-A-61-60708 and JP-A-61-60709.

Copolymer (1):

E/EA/MAH = 69.7/27.0/3.3% by weight
MI = 32 g/10 min.

Copolymer (2):

E/MA/MAH = 89.2/10.0/0.8% by weight
MI = 4 g/10 min.

Copolymer (3):

E/EA/MAH = 96.5/2.0/1.5% by weight
MI = 12 g/10 min.

where E denotes ethylene; EA, ethyl acrylate; MA, methyl acrylate; MAH, maleic anhydride; and MI, melt index.

The lactam metal salt compound for the component (B) was prepared by reacting $\epsilon$-caprolactam and ethyl-magnesium bromide in tetrahydrofuran to give caprolactammagnesium bromide and mixing it with an equal weight of $\epsilon$-caprolactam.

EXAMPLES 1 TO 3

The ethylene copolymer and the mixture of caprolactammagnesium bromide and caprolactam (50% by weight) shown in the Table were melt-blended at 200°C under a nitrogen atmosphere by means of a double-screw extruder provided with 30 mm diameter screws (counter-rotating), a side feed device, and a vacuum vent device, and during the blending, the caprolactam shown in Table 1 was added through the side feed device provided at the middle portion of the barrel of the extruder, and melt-blended, giving the graft copolymers. Unreacted caprolactam was recovered from the vacuum vent. Each of the graft copolymers was dried at 80°C for 12 hours, and from it the test specimens were prepared for the physical property determination with a (10 ounce) 0,2835 kg injection molding machine (Toshiba, Model IS-150-V) at 260°C and mold temperature of 70°C.

The results of the tests of the specimen were shown in Table for flexural modulus, Izod impact strength, heat distortion temperature, and heat deformation resistance (heat sag).

COMPARATIVE EXAMPLES 1 TO 3

By use of the 30 mm diameter extruder employed in the Examples, resin compositions were prepared in the same manner as in Examples by melt-blending the ethylene copolymers shown in Table, and adding polyamide 6 (made by Unitika Ltd., A1030BRL).

The physical properties of each of the composition were tested in the same manner as in Examples 1 to 3. The results are shown in Table. The compositions of the Comparative Examples 1 to 3 were inferior in the impact strength and heat resistance in comparison with those in Examples 1 to 3.

As described above, the present invention relates to a method for graft-copolymerizing a lactam compound onto an ethylene copolymer comprising maleic anhydride units, which method is novel and has never been disclosed before. The graft copolymers thus produced have remarkable advantages in balance of the properties of the molded products such as mechanical properties and thermal properties, as well as in external appearance. The graft copolymerization could not be foreseen to give such effects in the remarkable improvement in heat resistance and impact strength without impairing other properties.

The novel graft copolymers provided by the present invention are moldable easily into molded forms, films, sheets, etc. by conventional molding means employed for usual polyamide resins such as injection molding and extrusion molding, and give molded articles having satisfactory balance of properties such as impact strength, stiffness, heat resistance, etc., excellent appearance of uniformity and smoothness.

EP 0 365 234 B1

TABLE

| | (A) Ethylene copolymer (parts by weight) | (B) Lactam metal salt compound (parts by weight) | (C) ε-Caprolactam (parts by weight) | Polyamide 6 (parts by weight) | Flexural modulus 23°C (kg/cm²) | Izod impact strength -40°C (kg·cm/cm) | Heat Distortion temperature 4.6 kgf/cm² (°C) | Heat Deformation resistance 100°C×2 hr (mm) |
|---|---|---|---|---|---|---|---|---|
| Example 1 | Copolymer (1) 20 | 3.0 | 78.5 | – | 18400 | 11 | 172 | – |
| Comparative Example 1 | Copolymer (1) 20 | – | – | 80 | 18000 | 6 | 171 | – |
| Example 2 | Copolymer (2) 50 | 1.8 | 49.1 | – | 7500 | NB | – | 4 |
| Comparative Example 2 | Copolymer (2) 50 | – | – | 50 | 4100 | 35 | – | 8 |
| Example 3 | Copolymer (3) 60 | 4.0 | 38.0 | – | 8300 | 20 | – | 3 |
| Comparative Example 3 | Copolymer (3) 60 | – | – | 40 | 5800 | 12 | – | 15 |

1) Caprolactammagnesium bromide/caprolactam (weight ratio 1/1) mixture

## Claims

1. A process for producing a graft copolymer comprising melt-blending:

6

(A) 1 to 90 parts by weight of an ethylene copolymer having a melt index of 1 to 500 g/10 min and comprising (a) 40 to 99.9% by weight of ethylene units, (b) 0 to 60% by weight of units of an alkyl ester of a $C_{3-8}$ $\alpha,\beta$-unsaturated carboxylic acid, and (c) 0.1 to 10% by weight of maleic anhydride units;
(B) 0.1 to 10 moles of a lactam metal salt compound per mole of maleic anhydride units; and
(C) 10 to 99 parts by weight of a lactam compound.

2. The process of Claim 1, wherein the lactam compound is a compound of $\epsilon$-caprolactam.

3. The process of Claim 1, wherein the lactam metal salt compound (B) is a Grignard salt compound of $\epsilon$-caprolactam.

4. The process of Claim 1, 2 or 3, wherein the melt-blending is conducted with an extruder for plastics molding and at an average residence time of 1 to 60 minutes.

5. A process as claimed in any preceding claim, wherein the lactam metal salt compound (B) is formed in the process from a lactam and a metal compound.

6. A process as claimed in any preceding claim, which is carried out at a temperature of 100 to 280°C.

7. A process as claimed in any preceding claim, wherein the copolymer (A) and compound (B) are first blended and the lactam compound is then added and the mixture is melt-blended.

8. A molded article made from a copolymer produced by a process as claimed in any preceding claim.

**Patentansprüche**

1. Verfahren zur Herstellung eines Pfropfcopolymers, umfassend das Schmelzmischen von:
(A) 1 bis 90 Gew.-Teilen eines Ethylencopolymers mit einem Schmelzindex von 1 bis 500 g/10 min, das (a) 40 bis 99,9 Gew.-% Ethyleneinheiten, (b) 0 bis 60 Gew.-% Einheiten eines Alkylesters einer $C_{3-8}$ $\alpha,\beta$-ungesättigten Carbonsäure, und (c) 0,1 bis 10 Gew.-% Maleinsäureanhydrideinheiten umfaßt;
(B) 0,1 bis 10 Mol einer Lactammetallsalzverbindung pro Mol Maleinsäureanhydrideinheiten; und
(C) 10 bis 99 Gew.-Teilen einer Lactamverbindung.

2. Verfahren nach Anspruch 1, wobei die Lactamverbindung eine $\epsilon$-Caprolactamverbindung ist.

3. Verfahren nach Anspruch 1, wobei die Lactammetallsalzverbindung (B) eine Grignardsalzverbindung von $\epsilon$-Caprolactam ist.

4. Verfahren nach Anspruch 1, 2 oder 3, wobei das Schmelzmischen mit einer Strangpresse für Kunststoffverformung und mit einer durchschnittlichen Verweilzeit von 1 bis 60 Minuten durchgeführt wird.

5. Verfahren nach einem vorangehenden Anspruch, wobei die Lactammetallsalzverbindung (B) bei dem Verfahren aus einem Lactam und einer Metallverbindung erzeugt wird.

6. Verfahren nach einem vorangehenden Anspruch, wobei das Verfahren bei einer Temperatur von 100 bis 280°C durchgeführt wird.

7. Verfahren nach einem vorangehenden Anspruch, wobei das Copolymer (A) und die Verbindung (B) zuerst gemischt werden und die Lactamverbindung dann zugegeben wird und das Gemisch dem Schmelzmischen unterworfen wird.

8. Formgegenstand gefertigt aus einem Copolymer, hergestellt durch ein Verfahren nach einem vorangehenden Anspruch.

**Revendications**

1. Procédé de production d'un copolymère greffé comprenant le mélange en fusion :
   (A) de 1 à 90 parties en poids d'un copolymère éthylénique ayant un indice de fusion de 1 à 500 g/10 mn et comprenant (a) 40 à 99,9 % en poids de motifs éthylène, (b) 0 à 60 % en poids de motifs ester alkylique d'un acide carboxylique en $C_3$ à $C_8$ insaturé en $\alpha,\beta$ et (c) 0,1 à 10 % en poids de motifs anhydride maléique ;
   (B) de 0,1 à 10 moles d'un sel métallique de lactame par mole de motifs anhydride maléique ; et
   (C) de 10 à 99 parties en poids d'un composé lactame.

2. Procédé selon la revendication 1, dans lequel le composé lactame est un composé d'$\epsilon$-caprolactame.

3. Procédé selon la revendication 1, dans lequel le sel métallique de lactame (B) est un sel de Grignard d'$\epsilon$-caprolactame.

4. Procédé selon la revendication 1, 2 ou 3, dans lequel le mélange en fusion est réalisé avec une extrudeuse pour le moulage de matières plastiques et à un temps de séjour moyen de 1 à 60 minutes.

5. Procédé selon l'une quelconque des revendications précédentes, dans lequel le sel métallique de lactame (B) est formé dans le procédé à partir d'un lactame et d'un composé métallique.

6. Procédé selon l'une quelconque des revendications précédentes, qui est mis en oeuvre à une température de 100 à 280°C.

7. Procédé selon l'une quelconque des revendications précédentes, dans lequel le copolymère (A) et le composé (B) sont d'abord mélangés et le composé lactame est ensuite ajouté et le mélange est mélangé en fusion.

8. Article moulé fabriqué à partir d'un copolymère produit par un procédé selon l'une quelconque des revendications précédentes.